# FASCICULE DE BREVET EUROPEEN

(11) **EP 3 377 349 B1**
(45) Date de publication et mention de la délivrance du brevet: **08.07.2020**
(21) Numéro de dépôt: 16805303.1
(22) Date de dépôt: 09.11.2016
(51) Int. Cl.: B60K 1/04

(54) **VEHICULE ELECTRIQUE TERRESTRE DE TRANSPORT EN COMMUN, DE TYPE BUS, MUNI DE MODULES DE STOCKAGE D'ENERGIE ELECTRIQUE INTERIEURS**
ELEKTRISCHE LANDFAHRZEUG FÜR ÖFFENTLICHE VERKEHRSMITTEL, WIE EIN BUS, MIT INTERNEN STROMSPEICHERMODULEN
ELECTRIC LAND VEHICLE FOR PUBLIC TRANSPORT, SUCH AS A BUS, PROVIDED WITH INTERNAL ELECTRICAL ENERGY STORAGE MODULES

(30) Priorité: 16.11.2015 FR 1560981
(43) Date de publication de la demande: 26.09.2018
(73) Titulaire: Bluebus, 29500 Ergue Gaberic (FR)
(72) Inventeur: BESSON, Patrice, 69970 Marennes (FR); SAUVAGET, Thierry, 69780 Toussieu (FR)
(74) Mandataire: IPAZ
(86) Numéro de dépôt international: PCT/EP2016/077110
(87) Numéro de publication internationale: WO 2017/084936

(56) Documents cités:
- EP-A2- 2 529 985
- WO-A1-2011/007501
- CN-B- 102 582 689
- CN-U- 201 534 570
- CN-U- 202 806 332
- FR-A1- 3 010 834
- US-A1- 2005 056 472

## Description

La présente invention concerne un véhicule électrique terrestre de transport en commun, de type bus ou tram-bus, muni de modules de stockage d'énergie électrique, en particulier rechargeables, disposés à l'intérieur dudit véhicule.

Le domaine de l'invention est le domaine des véhicules électriques terrestres de transport en commun, de type bus ou tram-bus, munis de modules de stockage d'énergie électrique rechargeables pour alimenter au moins un moteur électrique dudit véhicule électrique.

### Etat de la technique

Le développement des véhicules électriques terrestres de transport en commun, en particulier sur route, pose la question du positionnement des batteries rechargeables prévues pour alimenter le moteur électrique du véhicule. Le positionnement des batteries doit prendre en compte différents paramètres tels que la sécurité des passagers en cas de collision, l'habitabilité du véhicule, l'accessibilité dans le véhicule, etc., sachant que la taille et le nombre des batteries sont notamment imposés par l'autonomie souhaitée pour le véhicule électrique.

Actuellement, dans les bus électriques, les batteries sont le plus souvent posées, en apparent, sur le pavillon du véhicule, en partie arrière, centrale ou avant du pavillon du véhicule, sous la forme d'un bloc additionnel faisant saillie du pavillon.

Cependant, cette disposition présente plusieurs inconvénients, dont une augmentation de la résistance au vent diminuant l'autonomie du véhicule, une augmentation de la hauteur totale du véhicule restreignant le passage du véhicule sur des routes dont la hauteur est limitée tels que des ponts, tunnels ou autre, et diminuant la stabilité du véhicule.

Par ailleurs, le fait de positionner les batteries sur le pavillon nécessite de prévoir une étanchéité additionnelle pour protéger les batteries contre les intempéries, ce qui rend leur installation coûteuse.

Un but de la présente invention est de remédier à ces inconvénients.

Un autre but de l'invention est de proposer un véhicule électrique terrestre de transport en commun, en particulier de type bus, proposant un agencement amélioré des modules de stockage d'énergie électrique.

Un autre but de la présente invention est de proposer un véhicule électrique terrestre de transport en commun, en particulier de type bus, proposant un agencement de module de stockage d'énergie électrique moins coûteux. Le document CN202 806 332 U décrit un véhicule selon le préambule de la revendication 1.

### Exposé de l'invention

L'invention permet d'atteindre au moins l'un de ces buts par un véhicule électrique selon la revendication 1.

Ainsi, le véhicule électrique selon l'invention propose de disposer le ou les modules de stockage d'énergie électrique dans le véhicule, par rapport au moyen d'étanchéité de l'habitacle. Ainsi, le véhicule selon l'invention permet d'éviter l'utilisation d'une paroi, ou d'un capot, d'étanchéité dédié à la protection du(des) module(s) de stockage d'énergie électrique en plus de l'étanchéité de l'habitacle déjà prévu. Autrement dit, l'invention propose d'utiliser un même moyen d'étanchéité à la fois pour l'habitacle et pour le(s) module(s) de stockage d'énergie électrique.

Par conséquent, le véhicule électrique selon l'invention est moins coûteux à fabriquer. De plus, le(s) module(s) de stockage étant disposé(s) du côté de l'habitacle, ils sont moins apparents depuis l'extérieur et ont moins d'influence sur le comportement du bus en terme de consommation, de stabilité et d'accessibilité, car leur position améliore le paramètre Cx dudit véhicule.

De plus, cette disposition présente l'avantage d'un design extérieur plus fluide et plus agréable.

Avantageusement, au moins un module de stockage peut être disposé dans un logement aménagé dans une paroi supérieure, dit berceau supérieur, entre un moyen d'étanchéité principal de la paroi supérieure et l'habitacle.

Le berceau supérieur peut être plongeant vers l'habitacle.

Le berceau supérieur peut être recourbé de sorte à plonger dans l'habitacle au niveau d'une zone centrale du véhicule dans le sens de la largeur du véhicule et remonter au niveau des coins supérieurs latéraux de l'habitacle.

En particulier, la partie plongeant dans l'habitacle du berceau supérieur peut se présenter en forme de trapèze isocèle, la petite base dudit trapèze se trouvant dans l'habitacle.

Le berceau supérieur peut comprendre un ou plusieurs compartiments, chaque compartiment étant prévu pour recevoir un module de stockage d'énergie électrique.

Les modules de stockage d'énergie électrique peuvent être disposés dans le berceau supérieur alignés dans le sens longitudinal du véhicule.

La paroi supérieure peut être munie d'un ou plusieurs capots, dits supérieurs, amovibles ou démontables, assurant à la fois l'étanchéité principale de l'habitacle et un accès au berceau supérieur depuis l'extérieur du véhicule.

Le berceau supérieur peut être aménagé pour recevoir, en plus des modules de stockage d'énergie électrique, des appareils électriques/électroniques relatifs au fonctionnement des modules de stockage d'énergie électrique tels qu'un boîtier de gestion, des modules de stockage, un ou plusieurs convertisseurs de puissance, etc.

En plus, au moins un module de stockage d'énergie électrique peut être disposé dans un logement, appelé berceau arrière, aménagé dans une paroi arrière, entre un moyen d'étanchéité principal de la paroi arrière et l'habitacle.

Le berceau arrière peut comprendre un ou plusieurs compartiments, chaque compartiment étant prévu pour recevoir un module de stockage d'énergie électrique.

Les modules de stockage d'énergie électrique peuvent être disposés dans le berceau arrière alignés dans une direction verticale. En particulier, le berceau arrière peut comporter plusieurs racks, pour recevoir chacun un module de stockage d'énergie électrique, suivant une direction perpendiculaire à la paroi arrière.

La paroi arrière peut être munie d'un ou plusieurs capots, dits arrière, amovibles ou démontables, assurant à la fois l'étanchéité principale de l'habitacle et un accès au berceau arrière depuis l'extérieur du véhicule.

Un tel berceau arrière peut être aménagé dans un module indépendant de l'ossature du véhicule, qui est ensuite fixé au reste de ladite ossature.

Le berceau arrière peut être aménagé pour recevoir, en plus des modules de stockage d'énergie électrique, des appareils électriques/électroniques relatifs au fonctionnement des modules de stockage d'énergie électrique tels qu'un boîtier de gestion, des modules de stockage, un ou plusieurs convertisseurs de puissance, une prise de charge, etc.

Le berceau arrière peut être aménagé pour recevoir des appareils annexes relatifs au fonctionnement du véhicule, tel qu'un compresseur, etc.

Au moins un des appareils annexes et/ou des appareils électriques/électroniques peut être disposé sur la périphérie du logement arrière dans au moins un logement aménagé pour ledit appareil.

Alternativement ou en plus, au moins un module de stockage peut être disposé dans un logement, appelé berceau inférieur, aménagé dans une paroi inférieure, entre un moyen d'étanchéité principal de la paroi inférieure et l'habitacle.

Le berceau inférieur peut comprendre un ou plusieurs compartiments, chaque compartiment étant prévu pour recevoir un module de stockage d'énergie électrique.

Les modules de stockage d'énergie électrique peuvent être disposés dans le berceau inférieur alignés dans la direction longitudinale du véhicule.

La paroi inférieure peut être munie d'un ou plusieurs capots, dits inférieur, amovibles ou démontables, permettant un accès au berceau inférieur suivant une direction transversale perpendiculaire aux parois latérales du véhicule.

Le berceau inférieur peut être aménagé pour recevoir, en plus des modules de stockage d'énergie électrique, des appareils électriques/électroniques relatifs au fonctionnement des modules de stockage d'énergie électrique tels qu'un boîtier de gestion, des modules de stockage, un ou plusieurs convertisseurs de puissance, une prise de charge, etc.

Le berceau inférieur peut être aménagé pour recevoir des appareils annexes relatifs au fonctionnement du véhicule, tel qu'un compresseur, etc.

Au moins un des appareils annexes et/ou des appareils électriques/électroniques peut être disposé sur la périphérie du berceau inférieur dans au moins un compartiment aménagé pour ledit appareil.

Le véhicule selon l'invention peut comprendre un moyen d'évacuation d'une condensation due à au moins un module de stockage, en particulier hors d'un logement dans lequel ledit au moins un module de stockage est disposé.

Lorsque l'au moins un module de stockage est disposé dans un logement, le moyen d'évacuation de condensation peut comprendre au moins une ouverture d'écoulement de la condensation hors dudit logement, aménagée dans ledit logement.

Par exemple, lorsque l'au moins un module de stockage est disposé dans le berceau supérieur, le moyen d'évacuation de condensation peut comprendre au moins une ouverture d'écoulement de la condensation hors dudit berceau supérieur, aménagée dans ledit berceau.

Avantageusement, le moyen d'étanchéité principal peut comprendre un capot démontable, ou amovible, permettant par exemple d'accéder au module de stockage d'énergie pour effectuer une opération de maintenance.

Le capot peut en outre être dimensionné pour enlever, ou remplacer, un module de stockage.

Dans une version particulièrement avantageuse, le moyen d'étanchéité principal peut comprendre un capot mobile, en particulier en rotation, entre une position fermée et une position ouverte.

Dans le cas où le module de stockage est disposé dans le berceau supérieur ou dans le berceau inférieur, le capot peut avantageusement être mobile autour d'un axe longitudinal. L'axe de rotation peut être positionné pour autoriser un accès depuis une paroi latérale du véhicule.

Lorsque, le module de stockage est disposé dans le berceau supérieur, le capot peut s'ouvrir vers le haut.

Lorsque, le module de stockage est disposé dans le berceau inférieur, le capot peut s'ouvrir vers le bas.

Selon l'invention, le berceau supérieur comporte un capot, ce dernier est muni d'une languette :
- prévue sur au moins une partie de la périphérie du capot,
- faisant saillie dudit capot vers le bas, et
- positionnée de sorte qu'en position fermée dudit capot, ladite languette se trouve à l'extérieur d'une seconde languette, prévue du côté de la paroi supérieure du véhicule, par exemple sur une surface fixe de la paroi supérieure, ou sur un cadre fixe dudit capot.

La languette du capot du berceau supérieur est munie d'un joint d'étanchéité venant appuyer sur une surface disposée en regard de ladite languette lorsque le capot est en position fermée.

Dans un mode de réalisation, nullement limitatif, le véhicule selon l'invention peut comprendre un moyen d'étanchéité, dit secondaire, disposé entre ledit au moins un module de stockage et l'habitacle.

En particulier, lorsqu'au moins un module de stockage est disposé dans un berceau supérieur ou un berceau arrière, ledit berceau peut être équipé d'un moyen d'étanchéité secondaire entre ledit berceau et l'habitacle.

Un tel moyen d'étanchéité est appelé « secondaire » car il est moins résistant, face à l'eau, que le moyen d'étanchéité principal.

Dans un mode de réalisation, nullement limitatif, le véhicule selon l'invention peut comprendre un moyen de protection contre le feu disposé entre au moins un module de stockage et l'habitacle.

Un tel moyen de protection peut comprendre une cloison anti-feu, positionnée entre ledit au moins un module et l'habitacle.

En particulier, lorsqu'au moins un module de stockage est disposé dans un berceau supérieur, un berceau arrière, ou un berceau inférieur, le dit berceau peut être équipé d'une cloison anti-feu, ou anti-incendie, protégeant l'habitacle.

Suivant un exemple de réalisation particulier, nullement limitatif, le véhicule selon l'invention peut être un bus électrique, un car électrique ou un tram-bus électrique.

Dans la présente demande, un « tram-bus » désigne un véhicule électrique terrestre de transport en commun monté sur roues et qui se recharge à chaque station, afin de ne pas nécessiter des infrastructures lourdes de type rails, caténaires, sur la voirie. Un tel véhicule électrique se recharge à chaque station au moyen d'éléments de charge de la station et d'un connecteur reliant ledit véhicule à ladite station.

En particulier, le véhicule peut comprendre quatre modules de stockage d'énergie électrique disposés dans un berceau supérieur et quatre modules de stockage d'énergie électrique disposés dans un berceau arrière.

Chaque module de stockage d'énergie électrique peut comprendre au moins une batterie, en particulier LMP® (pour « Lithium Métal Polymère »), ou au moins une supercapacité.

### Description des figures et modes de réalisation

D'autres avantages et caractéristiques apparaîtront à l'examen de la description détaillée d'un mode de réalisation nullement limitatif, et des dessins annexés sur lesquels :

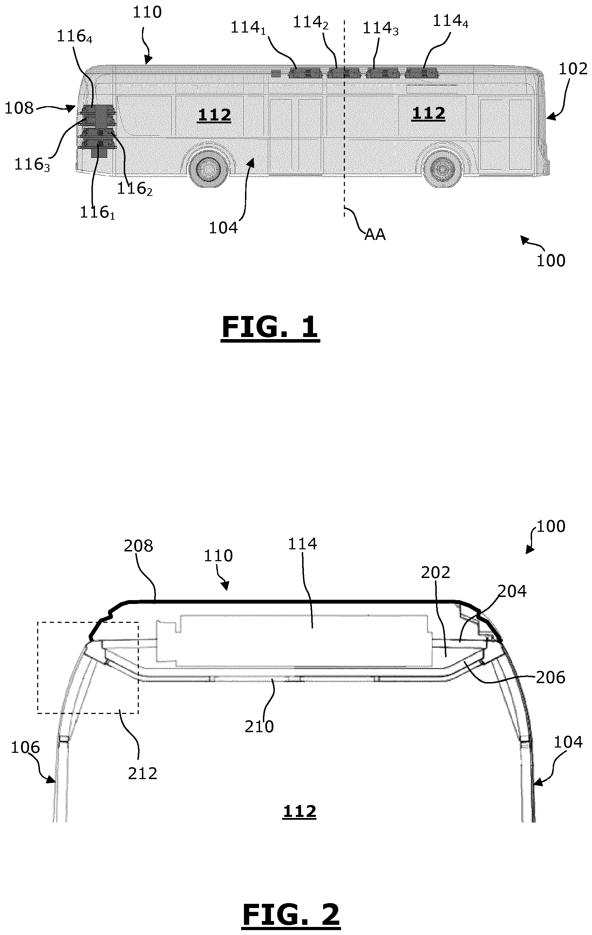

- les FIGURES 1-4 sont des représentations schématiques sous différents angles de vue d'un exemple non limitatif d'un véhicule électrique selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieure. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

La FIGURE 1 est une représentation schématique, suivant une vue de côté, d'un exemple de réalisation non limitatif d'un véhicule selon l'invention.

Le véhicule 100 représenté sur la FIGURE 1 est un bus électrique comportant une paroi avant 102, deux parois latérales 104 et 106, une paroi arrière 108 et une paroi supérieure 110.

Les parois 102-110 définissent un habitacle 112, prévu pour accueillir des utilisateurs dans le bus 100.

Le bus électrique comporte un ou plusieurs moteurs électriques (non représentés), des modules de stockage d'énergie électrique 114 et 116, rechargeables, pour alimenter le moteur électrique.

Plus précisément, le véhicule comprend quatre modules 114₁-114₄ de stockage d'énergie électrique disposés dans un logement, dit berceau supérieur, aménagé dans l'épaisseur de la paroi supérieure 110, et quatre modules 116₁-116₄ de stockage d'énergie électrique disposés dans un logement, dit berceau arrière, aménagé dans l'épaisseur de la paroi arrière 108.

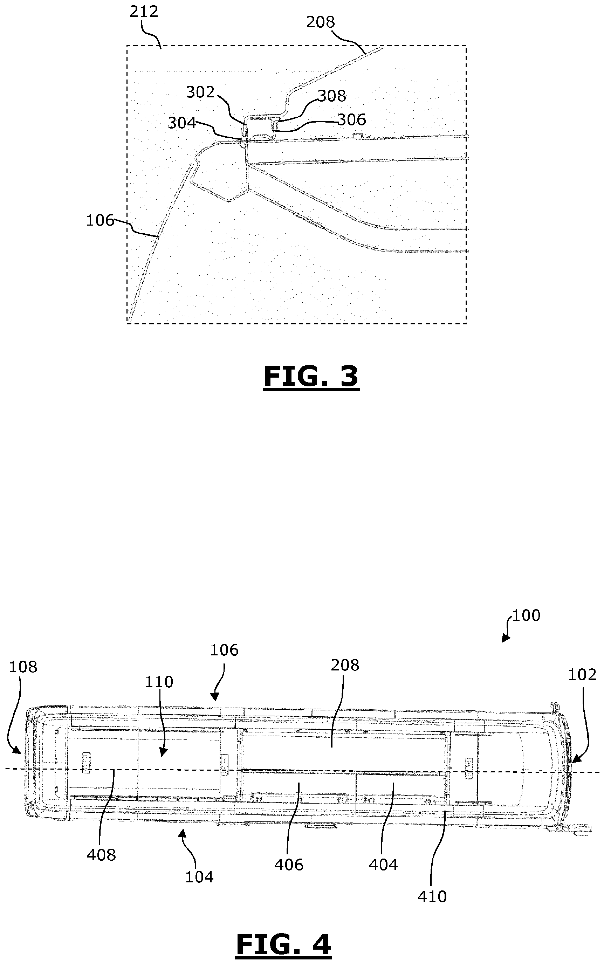

La FIGURE 2 et 3 sont des représentations partielles du véhicule de la FIGURE 1, selon une vue en coupe transversale, suivant l'axe AA représenté sur la FIGURE 1.

Tel que représenté sur la FIGURE 2, le berceau supérieur 202 est formé par des longerons transversaux 204 et 206 rejoignant les parois latérales 104 et 106 entre-elles. Les longerons 204 et 206 se rejoignent au niveau de chacune des parois latérales du bus 100. Le longeron 204 est sensiblement horizontal alors que le longeron 206 est recourbé et plonge dans l'habitacle 112. Le longeron 204 est disposé plus haut que le longeron 206.

Plus particulièrement, le berceau supérieur 202 est en forme de trapèze isocèle, la grande base dudit trapèze étant formée par le longeron horizontal 204 et la petite base du trapèze étant formée par le longeron 206 et plongeant dans l'habitacle 112.

Le véhicule 100 comprend au-dessus du berceau supérieur 202 une cloison ou un capot principal 208 assurant l'étanchéité principal de l'habitacle 112 contre les intempéries. Autrement dit, le berceau supérieur 202 est disposé entre le capot, ou la cloison, d'étanchéité principale 208 et l'habitacle 112.

La capot 208 est fixé à la paroi supérieure 110, et en particulier sur une ossature de la paroi supérieure 110, de manière démontable, sans dégrader ladite paroi supérieure, par exemple par vissage.

Un élément d'étanchéité secondaire 210, tel que par exemple un panneau d'habillage intérieur de l'habitacle 112, peut être prévu sous le berceau supérieur 202, par exemple pour protéger l'habitacle 112 contre la condensation due au module de stockage 114. Cet élément d'étanchéité secondaire 210 n'est pas prévu pour protéger l'habitacle 112 contre les intempéries.

La FIGURE 3 est une représentation détaillée de la zone 212 de la FIGURE 2.

Plus particulièrement, la FIGURE 3 est une représentation schématique d'un moyen d'étanchéité principal utilisé dans la paroi supérieure 110.

Tel que représenté sur la FIGURE 3, le capot, ou la cloison, d'étanchéité principal 208 comporte une languette, ou une lèvre, 302 faisant saillie du capot 208 vers le bas, prévue au niveau de l'extrémité du capot 208 sur tout le pourtour dudit capot 208. La languette 302 est équipée d'un joint d'étanchéité 304. La languette 302, équipée du joint d'étanchéité 304, vient appuyer sur une surface au niveau de la paroi supérieure 110.

Le véhicule 100 comporte également une languette, ou une lèvre, 306 faisant saillie vers le capot principal 208, prévue sensiblement en regard de de la périphérie du capot principal 208 sur l'ossature de la paroi supérieure. La languette 306 est également équipée d'un joint d'étanchéité 308. La languette 306 équipée du joint d'étanchéité 308 vient appuyer sur une surface du capot 208.

De plus, la languette 302 prévue sur le capot 208 vient se positionner à l'extérieur de la languette 306 prévue sur le véhicule 100. Ainsi, on obtient une double étanchéité l'une intérieure par la languette verticale 306 et l'autre extérieure par la languette 302.

La FIGURE 4 est une représentation détaillée du véhicule des FIGURES 1-3 selon une vue de dessus.

La paroi supérieure 110 est formée par une cloison en acier, ou en plastique ou encore en aluminium, fixée à l'ossature (non visible) du bus 100 par exemple par vissage.

Le capot principal 208, démontable, est prévu dans la paroi supérieure 110 directement ou par l'intermédiaire d'un cadre.

Le capot 208 assure l'étanchéité principale du berceau supérieur 202, et donc de l'habitacle 112.

Le bus 100 est en outre muni de deux capots secondaires 404 et 406, aménagés dans le capot principal 208, de sorte que, lorsque le capot principal 208 est enlevé, les capots secondaires 404 et 406 sont également enlevés. Chaque capot secondaire 404 et 406 peut être fixé au capot principal 208 directement ou par l'intermédiaire un cadre rapporté dans une ouverture aménagée dans le capot principal 208.

Dans l'exemple représenté, les capots secondaires 404 et 406 sont alignés dans le sens longitudinal du bus 100.

Chaque capot secondaire 404 et 406 est mobile en rotation autour d'un axe de rotation longitudinal 408 entre une position ouverte laissant accès au berceau supérieur 202 et une position fermée.

L'axe de rotation 408 est déporté par rapport au bord supérieur 410 du bus 100, se trouvant du côté de la paroi latérale 104, de sorte que l'accès au berceau supérieur 202 est réalisé depuis le bord supérieur 410 du bus 100.

Chaque module de stockage 114 et 116 peut comporter une ou plusieurs batterie(s), une ou plusieurs supercapacité(s), etc., et plus généralement mettre en œuvre toute technologie de stockage d'énergie électrique.

Bien entendu, le nombre de modules de stockage supérieurs n'est pas limité à 4 et peut être supérieur ou égal à 1. En particulier, le nombre de modules de stockage correspond au maximum de modules de stockage d'énergie dépendant notamment du poids du bus et de l'autonomie jugée suffisante pour le fonctionnement du bus.

Bien entendu, l'invention n'est pas limitée aux exemples détaillés ci-dessus. Par exemple, l'invention n'est pas limitée aux bus et peut par exemple être appliquée aux tram-bus et d'autres véhicules de transport en commun.

De plus, le véhicule selon l'invention peut comprendre, en plus au moins un module de stockage disposé entre l'habitacle et une cloison d'étanchéité de la paroi inférieure, en particulier dans un logement aménagé dans ladite paroi inférieure.

En outre, le véhicule selon l'invention peut comprendre des modules de stockage disposés uniquement du côté de la paroi supérieure, ou uniquement du côté de la paroi arrière, ou uniquement du côté de la paroi inférieure, ou en combinaison avec l'un quelconque de ces modes de réalisation.

## Revendications

1. Véhicule électrique terrestre de transport en commun de passagers (100), en particulier de type bus ou tram-bus, comprenant :
- un ou plusieurs modules de stockage d'énergie électrique rechargeables (114, 116) alimentant un moteur électrique dudit véhicule (100),
- un habitacle (112), et
- au moins un moyen d'étanchéité à l'eau (208, 302-308), dit principal, comprenant un capot mobile (404, 406) entre une position fermée et une position ouverte, protégeant ledit habitacle (112), au moins un module de stockage (114, 116) étant disposé entre ledit moyen d'étanchéité principal (208, 302-308) et ledit habitacle (112) ;
**caractérisé en ce que** le moyen d'étanchéité principal comprend une première languette (302) prévue sur au moins une partie de la périphérie dudit capot (208), faisant saillie dudit capot (208) vers le bas, et positionnée de sorte qu'en position fermée dudit capot (208), ladite première languette (302) se trouve à l'extérieur d'une deuxième languette (306), prévue du côté de la paroi supérieure (110) du véhicule (100), ladite première languette (302) étant munie d'un joint d'étanchéité (304) venant appuyer sur une surface disposée en regard de ladite première languette (302) lorsque le capot est en position fermée.

2. Véhicule selon la revendication précédente, **caractérisé en ce que** la deuxième languette (306), prévue du côté de la paroi supérieure (110) du véhicule (100), est équipée d'un joint d'étanchéité venant appuyer sur une surface du capot (208).

3. Véhicule (100) selon l'une quelconque des revendications précédentes, **caractérisé en ce qu'**au moins un module de stockage (114) est disposé dans un logement (202), dit berceau supérieur, aménagé dans une paroi supérieure (110), entre un moyen d'étanchéité principal (208, 302-308) de la paroi supérieure (100) et l'habitacle (112).

4. Véhicule (100) selon la revendication précédente, **caractérisé en ce que** le berceau supérieur (202) est plongeant dans l'habitacle (112) au niveau d'une zone centrale du véhicule (100) dans le sens de la largeur du véhicule (100) et remonte au niveau des coins supérieurs latéraux dudit habitacle (112).

5. Véhicule (100) selon la revendication précédente, **caractérisé en ce que** la partie plongeante du berceau supérieur (202) se présente en forme de trapèze isocèle, la petite base dudit trapèze se trouvant dans l'habitacle (112).

6. Véhicule (100) selon l'une quelconque des revendications 3 à 5, **caractérisé en ce que** le berceau supérieur (202) comporte plusieurs compartiments, prévus chacun pour recevoir un module de stockage d'énergie électrique (114).

7. Véhicule (100) selon l'une quelconque des revendications précédentes, **caractérisé en ce qu'**au moins un module de stockage (116) est disposé dans un logement, dit berceau arrière, aménagé dans une paroi arrière (108), entre un moyen d'étanchéité principal de la paroi arrière (108) et l'habitacle (112).

8. Véhicule (100) selon la revendication précédente, **caractérisé en ce que** le berceau arrière comporte plusieurs racks, alignés dans une direction verticale, et prévus, chacun, pour recevoir un module de stockage d'énergie électrique (116) suivant une direction perpendiculaire à la paroi arrière.

9. Véhicule (100) selon l'une quelconque des revendications 7 ou 8, **caractérisé en ce que** le berceau arrière est aménagé dans un module indépendant de l'ossature dudit véhicule (100).

10. Véhicule selon l'une quelconque des revendications précédentes, **caractérisé en ce qu'**au moins un module de stockage est disposé dans un logement, dit berceau inférieur, aménagé dans une paroi inférieure, entre un moyen d'étanchéité principal de la paroi inférieure et l'habitacle.

11. Véhicule selon l'une quelconque des revendications précédentes, **caractérisé en ce qu'**il comprend un moyen d'évacuation d'une condensation due à au moins un module de stockage.

12. Véhicule selon la revendication 11 et l'une quelconque des revendications 3 à 10, **caractérisé en ce que** le moyen d'évacuation de condensation comprend au moins une ouverture d'écoulement de la condensation hors dudit logement, aménagée dans ledit logement.

13. Véhicule (100) selon l'une quelconque des revendications précédentes, **caractérisé en ce qu'**il comprend un moyen d'étanchéité (210), dit secondaire, disposé entre ledit au moins un module de stockage (114) et l'habitacle (112).

14. Véhicule (100) selon l'une quelconque des revendications précédentes, **caractérisé en ce qu'**il comprend un moyen de protection contre le feu disposé entre au moins un module de stockage et l'habitacle.

15. Véhicule (100) selon la revendication précédente, **caractérisé en ce que** le moyen de protection contre le feu comprend une cloison anti-feu positionnée entre ledit au moins un module de stockage (114, 116) et l'habitacle.

16. Véhicule (100) selon l'une quelconque des revendications précédentes, **caractérisé en ce qu'**il s'agit d'un bus, d'un car ou d'un tram-bus électrique.

## Patentansprüche

1. Elektrisches Landfahrzeug des öffentlichen Personenverkehrs (100), insbesondere vom Typ Bus oder Tram-Bus, umfassend
- ein oder mehrere wiederaufladbare Modul(e) (114, 116) zur Speicherung von elektrischer Energie, die einen Elektromotor des Fahrzeugs (100) versorgen,
- eine Fahrgastzelle (112) und
- wenigstens ein Wasserdichtigkeitsmittel (208, 302-308), sogenanntes Hauptdichtigkeitsmittel, das eine zwischen einer geschlossenen Position und einer offenen Position bewegliche Haube (404, 406) umfasst, welche die Fahrgastzelle (112) schützt, wobei wenigstens ein Speichermodul (114, 116) zwischen dem Hauptdichtigkeitsmittel (208, 302-308) und der Fahrgastzelle (112) angeordnet ist;
**dadurch gekennzeichnet, dass** das Hauptdichtigkeitsmittel eine erste Lasche (302) umfasst, die an wenigstens einem Teil des Umfangs der Haube (208) vorgesehen ist, von der Haube (208) nach unten vorsteht und derart positioniert ist, dass sich die erste Lasche (302) in der geschlossenen Position der Haube (208) außerhalb einer zweiten Lasche (306) befindet, die auf der Seite der oberen Wand (110) des Fahrzeugs (100) vorgesehen ist, wobei die erste Lasche (302) mit einer Dichtung (304) versehen ist, die auf eine Fläche drückt, welche gegenüber der ersten Lasche (302) angeordnet ist, wenn sich die Haube in der geschlossenen Position befindet.

2. Fahrzeug nach dem vorhergehenden Anspruch, **dadurch gekennzeichnet, dass** die zweite Lasche (306), die auf der Seite der oberen Wand (110) des Fahrzeugs (100) vorgesehen ist, mit einer Dichtung ausgestattet ist, die auf eine Oberfläche der Haube (208) drückt.

3. Fahrzeug (100) nach einem der vorhergehenden Ansprüche, **dadurch gekennzeichnet, dass** wenigstens ein Speichermodul (114) in einer Aufnahme (202), sogenannten oberen Wiege, angeordnet ist, welche in einer oberen Wand (110) zwischen einem Hauptdichtigkeitsmittel (208, 302-308) der oberen Wand (100) und der Fahrgastzelle (112) angeordnet ist.

4. Fahrzeug (100) nach dem vorhergehenden Anspruch, **dadurch gekennzeichnet, dass** die obere Wiege (202) in einem mittleren Bereich des Fahrzeugs (100) in der Richtung der Breite des Fahrzeugs (100) in die Fahrgastzelle (112) abfällt und im Bereich der oberen seitlichen Ecken der Fahrgastzelle (112) wieder nach oben verläuft.

5. Fahrzeug (100) nach dem vorhergehenden Anspruch, **dadurch gekennzeichnet, dass** der abfallende Teil der oberen Wiege (202) in Form eines gleichschenkeligen Trapezes vorliegt, wobei sich die kleine Basis des Trapezes in der Fahrgastzelle (112) befindet.

6. Fahrzeug (100) nach einem der Ansprüche 3 bis 5, **dadurch gekennzeichnet, dass** die obere Wiege (202) mehrere Abteile aufweist, die jeweils vorgesehen sind, um ein Modul zur Speicherung von elektrischer Energie (114) aufzunehmen.

7. Fahrzeug (100) nach einem der vorhergehenden Ansprüche, **dadurch gekennzeichnet, dass** wenigstens ein Speichermodul (116) in einer Aufnahme, sogenannten hinteren Wiege, angeordnet ist, welche in einer hinteren Wand (108) zwischen einem Hauptdichtigkeitsmittel der hinteren Wand (108) und der Fahrgastzelle (112) angeordnet ist.

8. Fahrzeug (100) nach dem vorhergehenden Anspruch, **dadurch gekennzeichnet, dass** die hintere Wiege mehrere Gestelle umfasst, die in einer vertikalen Richtung ausgerichtet und jeweils vorgesehen sind, um ein Modul zur Speicherung von elektrischer Energie (116) in einer Richtung senkrecht zur hinteren Wand aufzunehmen.

9. Fahrzeug (100) nach einem der Ansprüche 7 oder 8, **dadurch gekennzeichnet, dass** die hintere Wiege in einem von dem Tragrahmen des Fahrzeugs (100) unabhängigen Modul angeordnet ist.

10. Fahrzeug (100) nach einem der vorhergehenden Ansprüche, **dadurch gekennzeichnet, dass** wenigstens ein Speichermodul in einer Aufnahme, sogenannten unteren Wiege, angeordnet ist, welche in einer unteren Wand zwischen einem Hauptdichtigkeitsmittel der unteren Wand und der Fahrgastzelle angeordnet ist.

11. Fahrzeug nach einem der vorhergehenden Ansprüche, **dadurch gekennzeichnet, dass** es ein Mittel zum Abführen eines Feuchtigkeitsniederschlags, der durch wenigstens ein Speichermodul bedingt ist, umfasst.

12. Fahrzeug nach Anspruch 11 und nach einem der Ansprüche 3 bis 10, **dadurch gekennzeichnet, dass** das Mittel zum Abführen eines Feuchtigkeitsniederschlags wenigstens eine Öffnung für das Ablaufen des Feuchtigkeitsniederschlags aus der Aufnahme aufweist, welche in der Aufnahme angeordnet ist.

13. Fahrzeug (100) nach einem der vorhergehenden Ansprüche, **dadurch gekennzeichnet, dass** es ein sogenanntes sekundäres Dichtungsmittel (210) umfasst, das zwischen dem wenigstens einen Speichermodul (114) und der Fahrgastzelle (112) angeordnet ist.

14. Fahrzeug (100) nach einem der vorhergehenden Ansprüche, **dadurch gekennzeichnet, dass** es ein Brandschutzmittel umfasst, das zwischen wenigstens einem Speichermodul und der Fahrgastzelle angeordnet ist.

15. Fahrzeug (100) nach dem vorhergehenden Anspruch, **dadurch gekennzeichnet, dass** das Brandschutzmittel eine Brandschutztrennwand umfasst, die zwischen dem wenigstens einen Speichermodul (114, 116) und der Fahrgastzelle angeordnet ist.

16. Fahrzeug (100) nach einem der vorhergehenden Ansprüche, **dadurch gekennzeichnet, dass** es sich um einen elektrischen Bus, Reisebus oder Tram-Bus handelt.

## Claims

1. Electric passenger land vehicle (100) for public transport, in particular of the bus or tyred tram type, comprising:
- one or more rechargeable electrical energy storage modules (114, 116) supplying an electric motor of said vehicle (100),
- a passenger compartment (112), and
- at least one waterproofing means (208, 302-308), called main waterproofing means, comprising a cover (404, 406) that can be moved between a closed position and an open position, which protects said passenger compartment (112), at least one storage module (114, 116) being placed between said main waterproofing means (208, 302-308) and said passenger compartment (112);
**characterized in that** the main waterproofing means comprises a first tab (302) provided on at least a portion of the periphery of said cover (208) projecting downwards from said cover (208), and positioned so that in the closed position of said cover (208) said first tab (302) is located on the outside of a second tab (306), provided on the side of the upper panel (110) of the vehicle (100), said first tab (302) being equipped with a seal (304) supported on a surface placed opposite said first tab (302) when the cover is in the closed position.

2. Vehicle according to the preceding claim, **characterized in that** the second tab (306) provided on the side of the upper panel (110) of the vehicle (100) is equipped with a seal supported on a surface of the cover (208).

3. Vehicle (100) according to any one of the preceding claims, **characterized in that** at least one storage module (114) is placed in a housing (202), called upper cradle, arranged in an upper panel (110) between a main waterproofing means (208, 302-308) of the upper panel (100) and the passenger compartment (112).

4. Vehicle (100) according to the preceding claim, **characterized in that** the upper cradle (202) drops into the passenger compartment (112) at a central area of the vehicle (100) in the width direction of the vehicle (100) and rises at the upper lateral corners of said passenger compartment (112).

5. Vehicle (100) according to the preceding claim, **characterized in that** the dropped portion of the upper cradle (202) is in the form of an isosceles trapezium, the short base of said trapezium being located in the passenger compartment (112).

6. Vehicle (100) according to any one of claims 3 to 5, **characterized in that** the upper cradle (202) contains several compartments, each intended to receive an electrical energy storage module (114).

7. Vehicle (100) according to any one of the preceding claims, **characterized in that** at least one storage module (116) is placed in a housing, called rear cradle, arranged in a rear panel (108) between a main waterproofing means of the rear panel (108) and the passenger compartment (112).

8. Vehicle (100) according to the preceding claim, **characterized in that** the rear cradle contains several racks aligned in a vertical direction and each intended to receive an electrical energy storage module (116) in a direction perpendicular to the rear panel.

9. Vehicle (100) according to any one of claims 7 or 8, **characterized in that** the rear cradle is arranged in an independent module of the frame of said vehicle (100).

10. Vehicle according to any one of the preceding claims, **characterized in that** at least one storage module is placed in a housing, called lower cradle, arranged in a lower panel between a main waterproofing means of the lower panel and the passenger compartment.

11. Vehicle according to any one of the preceding claims, **characterized in that** it comprises a means for evacuating condensation caused by at least one storage module.

12. Vehicle according to claim 11 and any one of claims 3 to 10, **characterized in that** the means for evacuating condensation comprises at least one opening for draining the condensation out of said housing, arranged in said housing.

13. Vehicle (100) according to any one of the preceding claims, **characterized in that** it comprises a waterproofing means (210), called secondary waterproofing means, placed between said at least one storage module (114) and the passenger compartment (112).

14. Vehicle (100) according to any one of the preceding claims, **characterized in that** it comprises a means of protection against fire placed between at least one storage module and the passenger compartment.

15. Vehicle (100) according to the preceding claim, **characterized in that** the means of protection against fire comprises a fireproof partition positioned between said at least one storage module (114, 116) and the passenger compartment.

16. Vehicle (100) according to any one of the preceding claims, **characterized in that** it is an electric bus, coach or tyred tram.
